(19) Europäisches Patentamt
European Patent Office
Office européen des brevets

(11) **EP 2 397 303 A1**

(12) **EUROPEAN PATENT APPLICATION**

(43) Date of publication:
**21.12.2011 Bulletin 2011/51**

(51) Int Cl.:
**B29C 47/06** (2006.01)    **B29C 44/46** (2006.01)
**B29C 47/90** (2006.01)    **B29C 47/86** (2006.01)

(21) Application number: **10166609.7**

(22) Date of filing: **21.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **URSA Insulation, S.A.**
**28004 Madrid (ES)**

(72) Inventor: **Kurte-Jardin, Michael, Dr.**
**33165 Lichtenau (DE)**

(74) Representative: **HOFFMANN EITLE**
**Patent- und Rechtsanwälte**
**Arabellastraße 4**
**81925 München (DE)**

(54) **Method and device for producing thermoplastic plastics foam panels, panel manufactured using same method and device and panels' use**

(57)    A method for producing thermoplastic plastic foam panels (30) especially extruded polystyrene panels, comprises the steps of feeding foamable plastic material for forming a plastic melt to an extruder (11) and generating a plastic melt therein, and to a nozzle (12) which is positioned downstream from the extruder (11) directing the plastic melt into separate flow channels (16, 17) inside the nozzle (12) to form individual strands, expanding the individual strands to form strands (20a, 20b) of foamed plastic material at the outlet (32) of the nozzle (12), combining, preferably under pressure, the co-extruded strands (20a, 20b) of foamed plastic material at their main surfaces (50) to form a joined strand (22) of foamed plastic material; and cutting the joined strand (22) of foamed plastic material into pieces of defined length to form the panels (30). Further, the invention relates to a device for carrying out the method and a panel as produced by such method and device, and the use of such panel for insulation purposes.

Fig. 1

## Description

Field of the Invention

The invention relates to a method for producing thermoplastic foam panels, especially extruded polystyrene panels with the features of claim 1 and a device for carrying out this method with the features of claim 7. Further, the invention relates to a panel according to claim 12 produced using such method and/or device and the use of such a panel.

Background Art

Extruded thermoplastic plastic foam, especially extruded polystyrene, in following referred to as XPS, is a rigid foam which is used for heat insulation. Another potential application of rigid XPS panels might be acoustic application, e.g. footfall sound insulation or water insulation in buildings, especially in basements and roofing. Due to its high pressure resistance and low water absorption it can be used in applications with high force and water contact without losing its properties.

Special fields of application of XPS panels are the insulation of building constructions, especially around the perimeter (perimeter floor slabs and basement walls) of buildings as well as insulation of flat roofs, domestic floors or industrial floorings etc., or the heat insulation of roofs or floor surfaces in industrially used buildings. XPS panels are produced according to the product standard EN 13164.

Like other thermoplastic plastic foam products, XPS products vary with respect to their compression strength and their thermal conductivity. In general, the quality of XPS insulation panels is determined by their cell structure. The cells have a mean diameter which, depending on the type of product and the thickness of the product, ranges from 0.05 - 0.9 mm. The cell structure is also influenced by the raw material composition and certain process parameters when manufacturing XPS. In general, the production of thin XPS panels is considerably easier than the manufacturing of XPS panels with high thicknesses. The reason for this lies in the higher variance of the raw material composition and the processing parameters when manufacturing thin XPS panels. When it is desired to produce XPS panels of high thickness, the melting temperature has to be reduced in order to enable the foaming capability. If the melting temperature has not been reduced sufficiently, thick XPS panels with the necessary characteristics cannot be foamed. However, as a side effect, a reduced temperature of the raw material melt generates in the final foamed product higher mean cell diameters in the direction of thickness and a higher density which has a negative impact on some of the product properties which are important for the desired quality of the product, as described below.

In general, XPS panels of smaller thickness have a smaller heat conduction per unit thickness (W/mK) compared to XPS panels of higher thickness. The smaller the heat conduction is, the better is the insulation effect of the product. Therefore, the thermal conductivity coefficient as determined by the methods as described in DIN EN 12667 and DIN EN 12939 is desired to be small.

As to the raw density of the product as determined by the method given in DIN EN 1602, a smaller density is desired because it results in reduced costs for the raw materials by virtue of a decrease in raw material consumption, which again increases the economical benefit.

A further parameter for controlling the material characteristic of the final product is the volume percentage of closed cells according to DIN ISO 4590. As a general tendency, XPS panels with a higher thickness tend to have a higher number of open cells. This has an influence on the water absorption characteristics because the higher the proportion of closed cells, the lower the absorption of water. Therefore, the amount of water absorbed per unit volume and as measured according to DIN EN 12087 tends to be smaller for smaller thicknesses of the XPS panels. The same applies for the diffusion of moisture according to DIN EN 12088 which also decreases with an increasing proportion of closed cells. Accordingly, a higher proportion of closed cells also reduces the absorption of water based on freeze-thaw according to DIN EN 12091.

Finally, the degree of compressive creep over a long period of time and the resistance to fire as determined following DIN 4102-15 are characteristics which determine the quality of XPS panels.

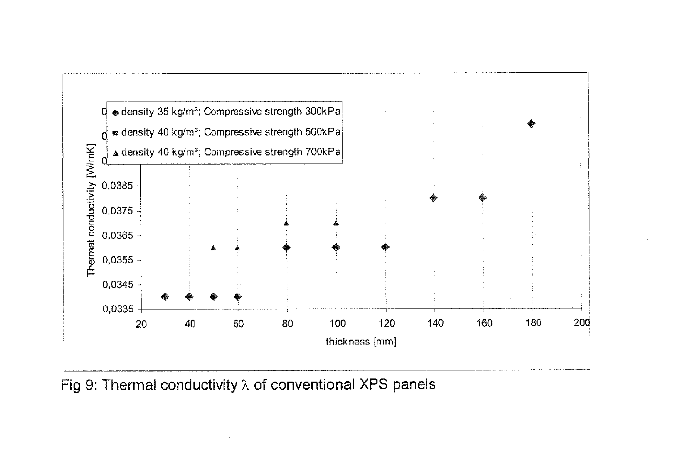

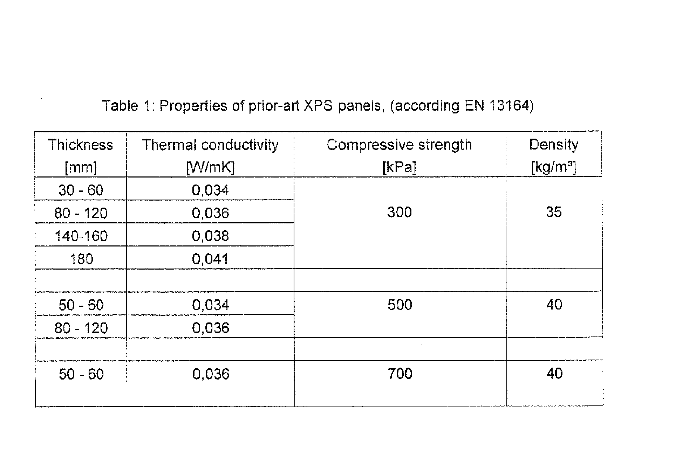

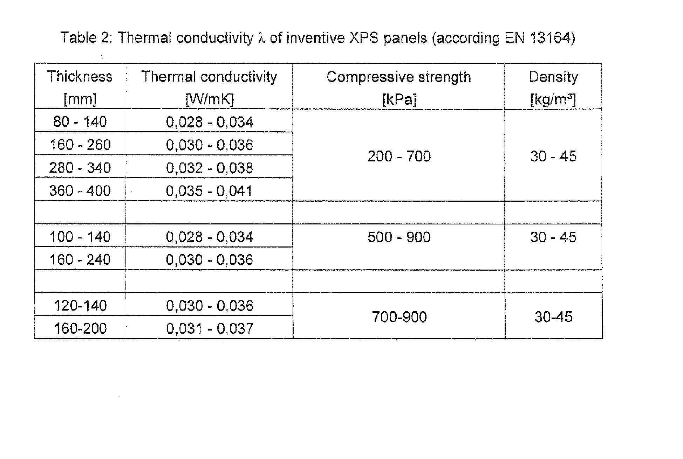

Table 1 gives product characteristics of conventional XPS panels and lists the thickness, the thermal conductivity, the compression strength and the density of the different products. The respective thermal conductivity has been measured according to DIN EN 12 667 / DIN EN 12939. It follows that with a higher thickness of the products, the thermal conductivity [W/mK] increases corresponding to a smaller heat insulation effect. This also follows from the enclosed Fig. 9 in which, for conventional XPS panels the thermal conductivity lambda is plotted against the thickness of the product. The higher the thickness of the product is, the higher is the thermal conductivity and the lower is the heat insulation effect. This puts a natural upper limit to the thickness of such products once a low thermal conductivity is desired.

In the prior art, various attempts have been made to avoid the above-described drawbacks of thick panels. One approach is to produce thick finished panels of foamed plastic material using a plurality of panels with a low thickness. One possibility to generate panels with high thickness is to join several panels with low thickness by using an additional adhesive. Such method, however, has two disadvantages. On the one hand, the individual extruded panels form an extrusion skin at the outer surfaces which considerably increases the diffusion resistance. In addition to this, the adhesive layer also acts as a barrier further increasing the resistance to diffusion.

EP 1 213 118 describes a process for joining XPS boards in order to produce new boards with a minimum thickness of 17 mm in which boards devoid of an extrusion skin on the contact surfaces are used as a starting material. Such starting material boards are joined by means of a water vapour permeable adhesive and/or mechanical joining elements. The skins of the joining surfaces of the panels are removed by a mechanical means like cutting, grinding, sawing or planing.

An alternative approach is described in EP 1 213 119 B1 where, before joining thin panels together, the extrusion skin at the opposing surfaces is removed. Then the XPS panels are joined by means of solvent welding. In order to carry out such solvent welding step, besides two additional method steps, a solvent has to be used which, depending on the chemical composition of such solvent, requires additional measures to ensure safe handling of such additional component.

Description of the Invention

Based on the requirement to produce thermoplastic plastic foam panels with high thickness showing advantageous characteristics, it is the underlying object of the invention to provide a method and device for producing high quality panels of high thickness. This object is solved by a method for producing thermoplastic plastic foam panels with the features of claim 1 and a device with the features of claim 7. Further, this object is solved by a thermoplastic plastic foam panel with the features of claim 12. The use of such panel is characterised by the features of claim 19.

According to claim 1, the method for producing thermoplastic plastic foam panels, especially extruded polystyrene panels, comprises the steps of feeding foamable plastic material for foaming a plastic melt to an extruder and generating a plastic melt therein. This plastic melt is gas loaded. The gas might be carbon dioxide $CO_2$ and/or hydrofluorocarbon HFC and it enables the expansion (foaming process) of the melt to form a micro-cellular foam structure. In a next step, the plastic melt is directed into separate flow channels to form individual continuous strands inside the nozzle which is located downstream to the extruder. Further, the individual continuous strands are expanded to form strands of foamed plastic material at the outlet of the nozzle, which is also referred to as die, before combining (merging), preferably under pressure, the co-extruded continuous strands of foamed plastic material at their main surfaces in order to form a joined continuous strand of foamed plastic material. Finally, the joined strand with high thickness, which is also referred to as total strand, of foamed plastic material is cut into pieces of defined length to form the panels. Such cutting into pieces of defined length is carried out transverse to the conveying direction of the strand of foamed plastic material which, according to the inventive method, can be continuously produced.

It is the basic idea of the invention to co-extrude individual strands of foamed plastic material which, downstream of the nozzle and before the individual strands have cooled down to ambient temperature are combined (merged) at their opposing main surfaces to form a joined strand of foam plastic material. This process is advantageous in that it is not necessary to remove extrusion skin at the opposing main surfaces of the strands to be combined. Further, no adhesive or mechanical connecting means are required. It is also not necessary to use any solvent for carry out solvent welding.

When combining (merging) the strands of foamed plastic material at the main surfaces, this can be carried out without applying pressure at the top and bottom surfaces of the joined strand. Whether or not pressure is applied depends on the desired final density of the product.

The advantage of the method and a panel produced using such method is its high quality compared to a panel which is already foamed as one layer to obtain the final thickness of such panel. Since individual strands of foamed plastic material are formed and such strands have a smaller thickness than the final panel, the advantages already discussed in the background art apply. The cell structure is optimized by having a smaller average cell size in the middle of the product compared to a panel which is foamed to a higher thickness. A smaller cell structure leads to an improved heat insulation effect, i.e. the thermal conductivity is smaller.

Table 2 gives product characteristics of inventive XPS panels and lists the thickness, the thermal conductivity, the compression strength and the density of the different products. The respective thermal conductivity has been measured according to DIN EN 12 667 / DIN EN 12939. It follows that in comparison to conventional XPS panels, inventive XPS panels with a given thermal conductivity can be produced with significantly higher thicknesses of the final panel.

Further, the joined surfaces of the individual strands act as a barrier against water such that a smaller absorption of water and improved freeze-thaw characteristics follows. A smaller density also has advantages with respect to the behaviour of the panels in case of fire. A better heat insulation also leads to longer resistance times and, once the panels go up in flames, a smaller density also means that less material burns and less smoke is produced. Finally, the panels as produced according to the inventive method have a considerably increased dimension stability compared to a panel foamed in one layer to obtain the same thickness.

According to a preferred embodiment, at least one of the individual strands is treated such as to have a density and heat conduction coefficient which is different to those of at least one other of the individual strands. Such different density and heat conduction coefficient can be generated by adjusting the expanding conditions when foaming the melt at the outlet of the die. A further possibility to influence density and heat conduction coefficient is the adjustment of the temperature profile of the melt in the individual flow channel before foaming.

Preferably, the method further comprises after combining the strands to form a joined strand of foamed plastic material the step of directing such joined foamed plastic material into a calibrator which is adapted to calibrate the thickness of the joined foamed strand. The calibrator can be adjusted to a certain thickness and applies pressure to at least the two main surfaces of the joined foamed strand of plastic material to achieve a uniform predetermined thickness. Such further step ensures that the characteristics of the product are as uniform as possible and also contributes to provide produced panels with a good visual appearance.

Preferably, the method further comprises the step of trimming the longitudinal sides of the joined strand of foamed plastic material. This finally leads to panels of a cuboid shape or, depending on specific needs, panels of a trapezoidal shape which could be used alternately with subsequent panels fixed next to each other having a complementary shape.

According to a preferred embodiment, the expansion ratio "E" which is defined as the ratio of the thickness of an individual strand of foamed plastic material to the height of the opening at the outlet of the die, is between 25 and 100. In other words, when foaming the plastic melt and expanding it to form the individual strands of plastic material there is a high expansion ratio which considerably reduces the density of the individual strands of foamed plastic material.

The inventive device for carrying out the inventive method comprises a nozzle (die) which is located downstream of an extruder with a plurality of separate channels and associated outlets of the nozzle, and a calibrator positioned downstream of the nozzle which is provided with means to adjust the distance between two plate-like calibration elements. Each separate outlet is provided with at least one narrowing element which narrows the cross sectional area of the channels to a foaming orifice. Further, individual cooling or heating devices are provided in the nozzle which are adapted to individually heat or cool plastic melt inside the channels. Such device is highly versatile because depending on the shape and use of the narrowing elements in the device, the foaming conditions of the melt can be greatly influenced. Further, the operation of the device and especially the foaming conditions can be influenced by the individual cooling or heating devices. Depending on the control of such individual cooling or heating devices, it is even possible to fully block one channel of the nozzle so that only the other channel or channels are operative.

According to a preferred embodiment, the separate channels have a rectangular cross-section and the narrowing elements are two so-called lips along the long sides of each outlet of rectangular cross-section. The lips enable a maximum pressure drop over a short distance. By selecting a rectangular cross-section, individual foamed strands can be produced which nearly have a rectangular shape. What is in fact foamed are individual foamed strands having a super-elliptical shape as described in more detail below.

The use of lips along the long sides which gradually reduce the cross-section of the outlet to a foaming orifice prove to be highly efficient for the expansion ratios E between 25 and 100.

According to a preferred embodiment, the individual cooling or heating devices cooperate with a control device which is configured and adapted to individually set different temperatures at the upper side and lower side of at least one of the separate channels. Such high variability for adjusting the temperature can be used to make sure that the die material surrounding each channel has the same temperature. In other words, the individual heating and cooling devices can be used to achieve a uniform temperature despite of different geometries and adjacent heat sources. Alternatively, it is also possible to set individual and different temperatures at the upper side and lower side of at least one of the separate channels. Such device can be used to influence the foaming conditions close to the upper side and lower side of the melt which, within special process ranges, can be used to improve the joining of the foamed strands.

Preferably, the separate channels branch off from a common duct for melt. This simplifies the overall design of the device. However, it is also possible to use slightly different compositions of the melt in the separate channels. In this case, a common duct cannot be used but the basis material for generating a plastic melt has to be fed and processed separately in the device.

The inventive thermoplastic foam panel, especially from extruded foamed polystyrene, manufactured using the inventive method is characterized in that the cross-section of each individual strand of foamed plastic material is of super-elliptical shape with essentially planar main surfaces at the top side and bottom side of each strand. A super-elliptical shape is generally also referred to as a Lamesche curve and is a geometric shape which is a mixture between an ellipsoide shape and a rectangle. In a cartesian coordinate system, such super-elliptical geometry can be described by the following equation:

$$\left(\frac{x}{a}\right)^n + \left(\frac{y}{b}\right)^m = 1$$

with n, m being larger or equal to zero and a, b being the half axes of the curve.

Such geometry has the advantage that there are planar main. surfaces which also serve as the joint surfaces where a plurality of individual strands are combined together. Further, when trimming the side surfaces of a panel, less waste material is produced compared to a panel foamed into a single strand (= one layer).

According to a preferred embodiment, all individual strands combined in the panel have essentially the same densities and heat conductivities. In other words, the basic conditions for foaming each strand are the same. This can be achieved by having the same process parameters for generating each individual foamed strand.

However, it is also possible to manufacture a product wherein at least one of the individual strands has a density and thermal conductivity different to those of at least one other of the individual strands. When discussing preferred embodiments of the invention, an example of such a homogenous panel will be given.

Preferably, the panels have a thickness between 80mm and 400 mm, preferably between 140 and 280 mm.

The lower value of 80mm follows from the fact that the inventive panel has at least two foamed strands joined together. As soon as one individual strand has a thickness exceeding 40mm, it becomes advantageous to use the inventive method arriving at very favourable product characteristics as discussed above.

Preferably, the panels are composed of 2 to 10 individual strands, preferably of 2 to 6 strands.

Preferably, the panel has a thermal conductivity of 0.028 - 0.041 W/mK. The preferred range of the density of the panel is between 35 - 45 kg/ m³ and the corresponding compression strength which is closely related to the density ranges between 200 and 900 kPa.

The inventive use of an inventive panel is for heat insulation, especially for insulating buildings, or acoustic insulation, especially footfall sound insulation. For such specific applications, the high degree of insulation properties combined with the relatively high compression strength and water tightness are especially advantageous.

Brief description of the drawings

In the following, the invention will be briefly described with reference to the accompanying drawings in which:

Fig. 1    schematically shows a cross-sectional view of the tool of the nozzle (die) and the production of an inventive product;

Fig. 2    schematically shows section of nozzle as an example for the arrangement of heating and cooling means;

Fig. 3    schematically shows two strands of foamed plastic materials leaving the nozzle;

Fig. 4    shows a joined strand (= total strand) of foamed plastic material according to a first embodiment;

Fig. 5    shows a joined strand of foamed plastic material according to a second embodiment;

Fig. 6    shows a joined strand of foamed plastic material according to a third embodiment;

Fig. 7    shows a joined strand of foamed plastic material according to a fourth embodiment;

Fig. 8    shows a panel made from the joined strand according to the fourth embodiment; and

Fig. 9    gives prior art examples of thermal conductivity over the thickness of XPS-panels.

Description of preferred embodiments

In the following, throughout the drawings and embodiments as described, the same elements will be described by the same reference numerals.

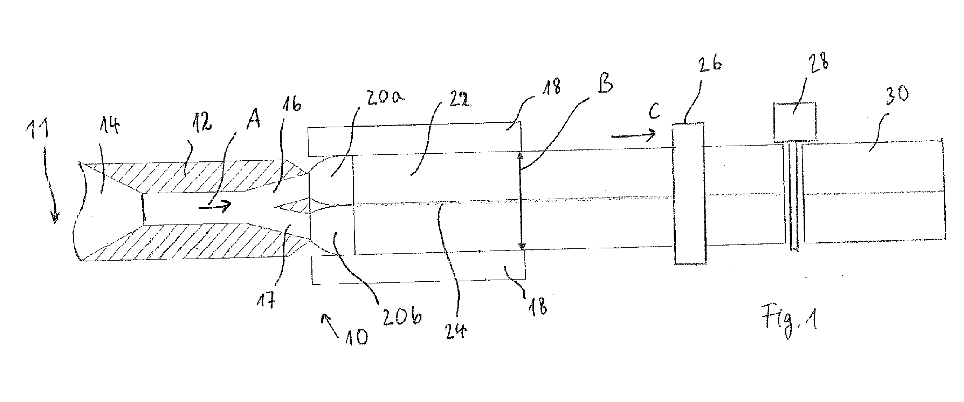

Fig. 1 shows a part of the inventive device generally referred to by reference 10. It comprises an extruder (11), and the nozzle 12 (= die) which is located downstream to the conventional extruder(s) (11) not shown in detail. The nozzle 12, which is schematically shown in Fig. 1 is fed with thermoplastic plastic material which is melted in an upstream extruder and supplied into channel 14 of the nozzle 12. The flow of melt through the die in the direction of arrow A is separated into a plurality of individual channels, in the example of Fig. 1 into two channels 16 and 17. At the end of the channels, the plastic melt is foamed to form two foamed strands 20a, 20b which, downstream of the nozzle 12 are directed into the gap between two side plates of a calibrator 18. The side plates are arranged at the top side and bottom side of the individual strands 20a, 20b and the distance between the side plates can be adjusted in the direction of arrow B.

In the calibrator 18, both strands 20a, 20b are combined together to the joined strand 22 (= total strand) with a seam surface between the two opposing main surfaces of the individual strands 20a, 20b. Further downstream in the conveying direction there is a device 26 for trimming the side surfaces of the joined strand 22 as well as a cutting device 28 for cutting the joined strand into individual panels 30.

The connection between the individual strands 20a, 20b is formed without the use of any additional material like glue but simply by applying elevated temperatures and pressure.

The elevated temperature stems from the extrusion process itself and heating means which are located at the outlet of the nozzle. The pressure, if required at all, is applied in the calibrator. The calibrator 18 might be formed by two plates or any other calibrating means, e.g. rollers. Between the calibrating means a gap is formed which determines the height of the total strand 22, i.e. the height of the final panel before applying any trimming operation. By adjusting the gap of the calibrator means the pressure level can be set which is applied to press the individual strands together in order to form the total strand. For this purpose a pressure should be applied ranging between 0,1 and 2,7 MPa (1 to 27 bar).

The temperature in the joining area (=seam) between two adjacent strands decreases from the entrance of the calibrator 18 downstream to the exit of the calibrator 18 and it also decreases from the middle of the joining area (= center line of the seam) to the outside (= skin) of the individual strands 22a, 22b. The temperature in the joining area between the two mains surfaces 50 of adjacent individual strands 22a, 22b is between 30 and 141°C when passing through the calibrator 18.

Both, the temperature and the pressure in the joining area between adjacent individual strands 22a, 22b determine inter alia the quality of the final joint formed between two adjacent strands 22a, 22b. Among others the quality of the of the joining area between the individual strands 22a, 22b depends on the strength of the joint between individual strands 22a, 22b and on the degree of voids or other irregularities in the joining zone. An improved quality of the joining area can be achieved if the temperature in the joining zone between two adjacent strands 22a, 22b is between. 32 and 110°C when passing through the calibrator and the pressure to be applied in the calibrator is between 0,12 and 0,9 MPa (= 1,2 to 9 bar).

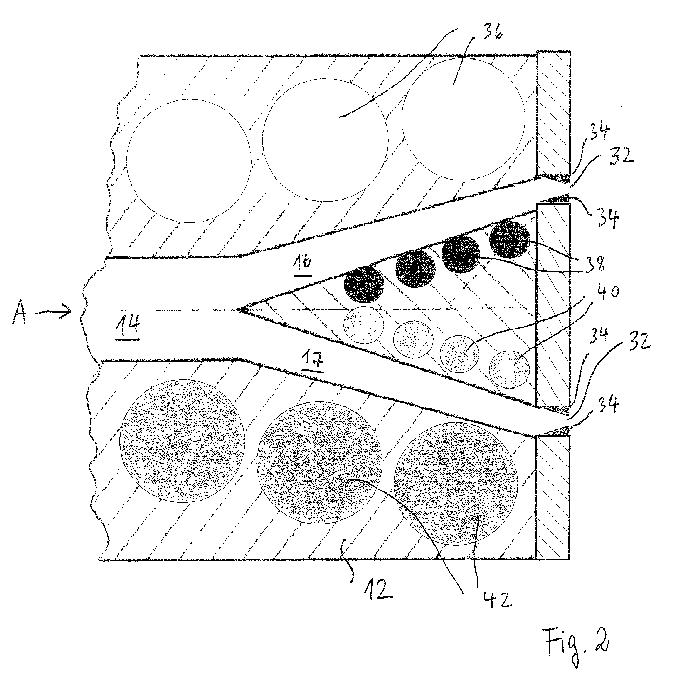

Fig. 2 shows in more detail a cross-sectional view of a part of the nozzle 12. The melt enters in the direction of arrow A channel 14 of the nozzle 12. The channel 14 has a rectangular cross-sectional shape and divides into individual channels 16 and 17 both also having rectangular cross-sections. As can be seen from Fig. 2, the individual channels 16, 17 narrow along the path of the melt and, at the outlet 32 of the nozzle 12, narrowing elements 34 having the shape of lips, which enable a maximum pressure drop over short distance. The lips are arranged along the upper and lower sides of the rectangular channels 16, 17 which narrow the channels to orifices with very small heights.

As an example, the dimensions can be such that the width of the individual strands produced ranges from 500 to 800 mm. The height of the opening narrowed by lips 32 ranges between 0.4 to 8.0mm. After leaving the narrow foaming orifice, the individual strands foam to a thickness between 40 and 200mm. so that the extension ratio E defined as the ratio of the thickness of an individual strand of foamed plastic material to the height of one opening at the outlet of the die calculates to 25 to 100.

In the nozzle 12, there are provided several individual heating or cooling devices denominated with reference numerals 36, 38, 40 and 42 in the schematic example as shown in Fig. 2. The heating or cooling devices 36 to 42 can be provided by means of tubular ducts within the extruder tool through which a suitable medium can be directed. The heating/cooling devices 36, 38, 40 and 42 can be individually controlled and operated. This serves to increase the accuracy of the temperature of the walls surrounding the individual channels 16, 17. Depending on the heat applied to one panel, the metal material of the nozzle will conduct heat also to adjacent channels so that an individual control of each heating/cooling device makes it possible either to provide a uniform temperature all over the die around the individual channels or to provide a predetermined, different temperature to individual channels. Such individual temperature control can serve to generate foamed strands and the respective resulting panels of different characteristic properties. The application of different temperatures at both sides of one channel can also be used to counteract the tendency of the foamed strands to become curved. In addition to the heating or cooling devices 36, 38, 40 and 42 which are placed in the nozzle 12, the calibrator 18 might be also equipped with extra heating and cooling devices in order to control the temperature profile more precisely when joining the individual adjacent strands 22a, 22b together.

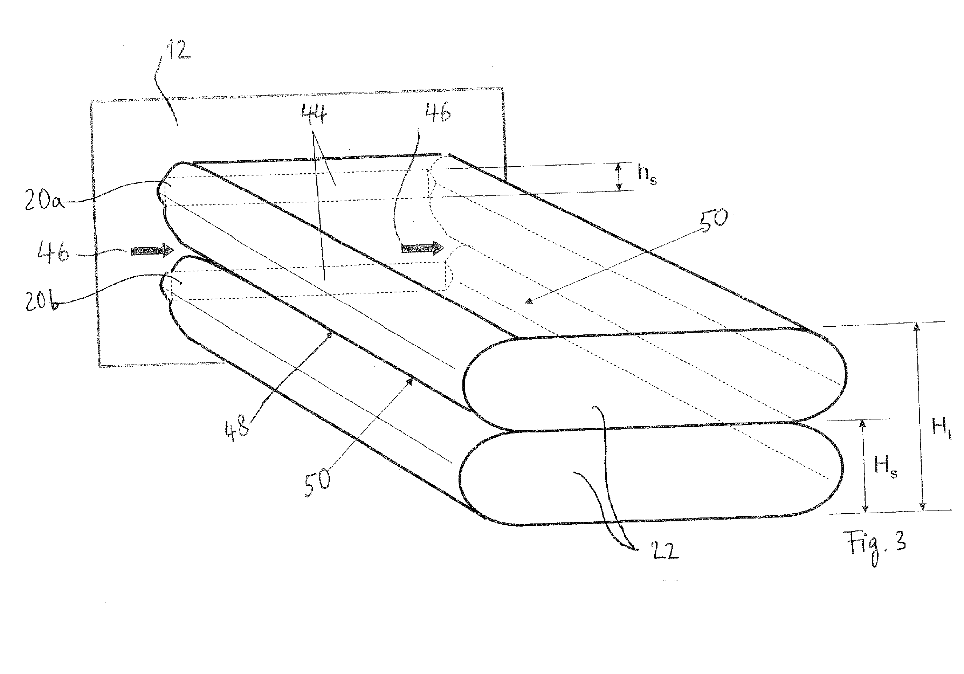

Fig. 3 shows two individual strands of foamed plastic material leaving the nozzle 12 and how they are combined to form a joined strand. Dashed lines also show the position of orifices 44 which are formed between the narrowing elements at the outlet of the nozzle. The height $h_s$ of the orifices, as outlined above, is between 0.4 and 8.0 mm. The two strands 20a, 20b leaving the orifices 44 are initially provided with a gap between them and, as also schematically shown in Fig. 1, brought into contact with each other to form the joined strand 22. The two individual strands are joined throughout a joining zone 48 which is defined by the contact areas between the two opposing main surface 50 of strands 20a and 20b.

The height $H_s$ of each individual strand also in the final product ranges from 40 to 200mm and the total height $H_t$ of the panel, in this example made up of two strands, is from 80 to 400mm. The width of the final product, which is the horizontal direction in Fig. 3, is between 500 and 800mm. The length of the joined strand 22 is undefined because the continuous extrusion and combining process produces an endless supply of raw material which is further processed in subsequent steps into the final shape of the panels.

In Fig. 3, for the sake of better representation, calibration plates as shown in Fig. 1 have been omitted.

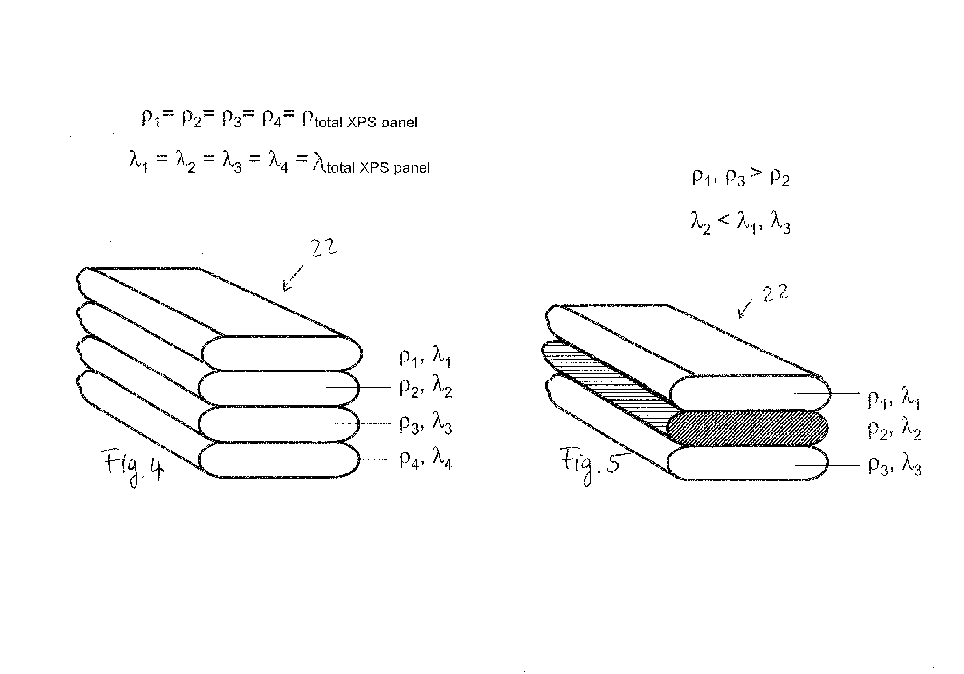

Figs. 4 to 7 show different embodiments of a joined strand 22 made up of different individual strands. In all embodiments, the properties density and thermal conductivity are compared. In the first example according to Fig. 4, all four individual strands have the same density and the same thermal conductivity which leads to the overall effect that the individual densities correspond to the density of the joined strand (= total strand) and of the respective finished panel and the individual heat conductivities of each strand also corresponds to the total thermal conductivity of the joined strand (= total strand) and of the respective finished panel. This is the result of the fact that the total strand, in this example of XPS, consists of four layers with a homogeneous density and thermal conductivity distribution.

The example as given in Fig. 5 is a joined strand 22 made up of three layers. The bottom layer and the top layer have a higher density than the middle layer. Correspondingly, the thermal conductivity of the middle layer is smaller than that of the top layer and bottom layer. The resulting joined strand has a strong top and bottom combined with a middle layer with good heat insulation properties. As outlined above, different properties of the individual strands of foamed material can be achieved by either varying the dimensions of the orifice and/or by varying the temperature in the individual channels leading to the foaming orifices.

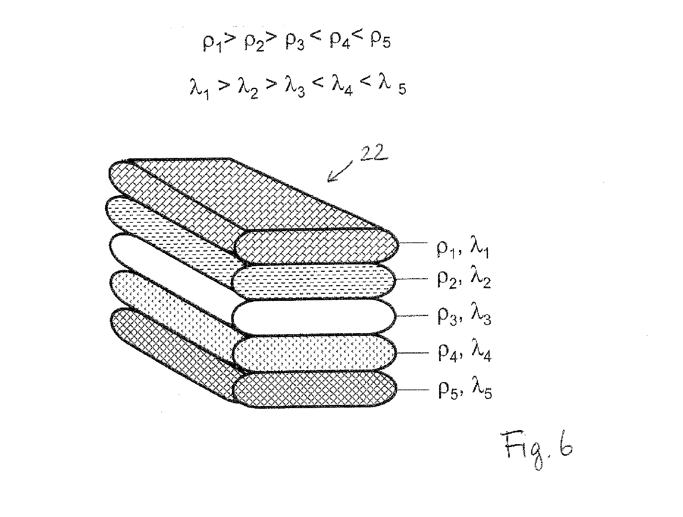

Fig. 6 shows another variation of a joined strand 22 made up of five individual layers. Such thick XPS strands are provided with a low thermal conductivity and low density in the center whereas, starting from the center, the values of thermal conductivity and density gradually increase from the center to the top and bottom, respectively. This is similar to the embodiment as shown in Fig. 5 and intends to demonstrate that it is possible to provide a more gradual change of the characteristic properties by providing a higher number of individual layers (strands).

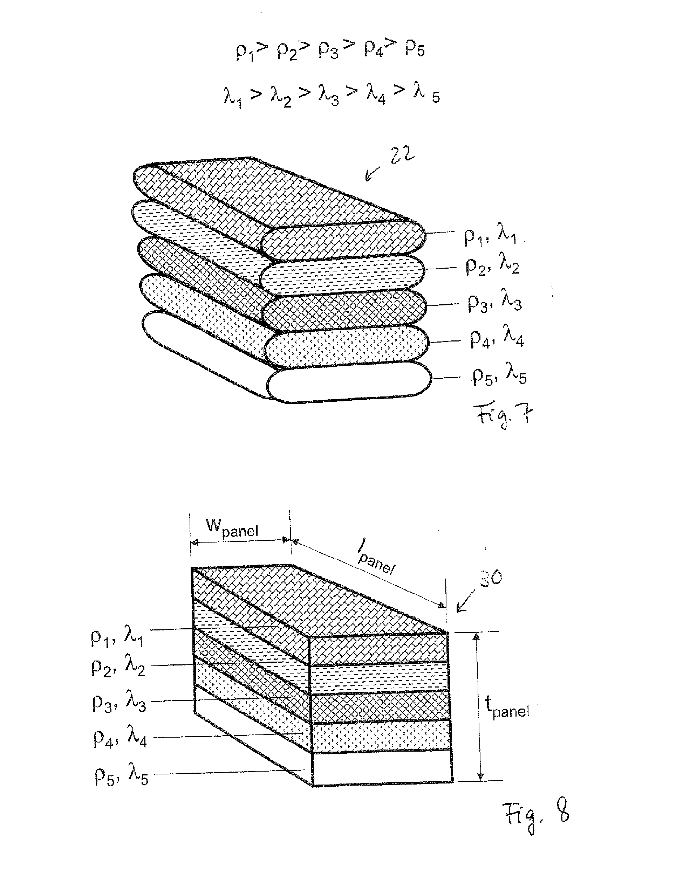

Fig. 7 shows another specific embodiment of the invention in which the combined strand 22 (= total strand) also consists of five individual layers with a gradually decreasing thermal conductivity and a gradually decreasing density from the top to the bottom (or vice versa). This embodiment is specifically directed to applications in which a hard shell is required but should be combined with regions of the overall product in which a high heat insulation effect can be achieved.

The examples as shown in Figs. 6 and 7 with five layers show that the super-elliptical shape of each individual layer (strand) already leads to the effect that such a thick combined strand consisting of five layers nearly automatically has a cuboid shape. This has the advantage that only a relatively small amount of material has to be removed when such products as shown in Figs. 4 to 7 are trimmed along their longitudinal sides in order to form cuboid panels. An example of such a cuboid panel corresponding to the embodiment as shown in Fig. 7 is shown in Fig. 8 in which, the panel according to Fig. 7 has been further cut along its longitudinal edges to come to the final shape of panel 30. The length of each individual panel can be adjusted according to the desired needs because the continuous manufacturing process can be used to produce panels with any practically feasible length $1_{panel}$ as desired. The width of the panels corresponds to the width of the individual strands minus the round shaped part of the super-elliptical shape contributing to the total width. The thickness of the panel $t_{panel}$ is the same as that for the joined strand and ranges from 80 to 400mm.

The method, device and product as described above has the advantage that it combines the positive effects of thin panels made of plastic foam material with high thicknesses of such products. Further, no additional complicated process steps are necessary as described in the prior art combining the foamed material by means of glue or solvent welding. Further, specific density profiles and heat conductivities within one panel can be achieved.

## Claims

1. Method for producing thermoplastic plastic foam panels (30), especially extruded polystyrene panels, comprising the steps:

   (a) feeding foamable plastic material for forming a plastic melt to an extruder (11) and generating a plastic melt therein;
   (b) directing the plastic melt into separate flow channels (16, 17) inside an nozzle (12), positioned downstream of the extruder (11), to form individual strands;
   (c) expanding the individual strands (20a, 20b) to form strands (20a, 20b) of foamed plastic material at the outlet (32) of the nozzle (12);
   (d) combining, preferably under pressure, the individual strands (20a, 20b) of foamed plastic material at their main surfaces (50) to form a joined strand (22) of foamed plastic material; and
   (e) cutting the joined strand (22) of foamed plastic material into pieces of defined length to form the panels (30).

2. Method according to claim 1 further comprising the step after step (d):

   (d1) directing the joined strand (22) of foamed plastic material into a calibrator (18) which is adapted to calibrate the thickness of the joined strand (22).

3. Method according to any of the preceding claims, further comprising the step:

   (d2) trimming the longitudinal sides of the joined strand (22) of foamed plastic material.

4. Method according to any of the preceding claims, wherein the expansion ratio E, which is defined as the ratio of the thickness ($H_s$) of an individual strand (20a, 20b) of foamed plastic material to the height ($h_s$) of one opening (44) at the outlet (32) of the nozzle (12), is between 25 and 100.

5. Method according to any of claims 2 to 5, wherein the temperature in the joining zone at the main surfaces (50) of the individual strands (20a, 20b) when passing through the calibrator (18) is between 30 and 141°C, preferably between 32 and 110°C.

6. Method according to any of claims 2 to 5, wherein the pressure to be applied in the calibrator (18) is between 0,1 and 2,7 MPa, and preferably between 0,12 and 0,9 MPa.

7. Device for carrying out the method to any of the claims 1 to 6, comprising:

- an extruder (11), a nozzle (12), positioned downstream of the extruder (11) with a plurality of separate channels (16, 17) and associated outlets (32) of the nozzle (12); and
- a calibrator (18) positioned downstream of the nozzle (12), the calibrator (18) being provided with means to adjust the distance between two plate-like calibration elements (18), wherein
- each separate outlet is provided with at least one narrowing element (34) which narrows the cross-sectional area of the channels (16, 17) to a foaming orifice (44), and
- individual cooling or heating devices (36, 38, 30, 42) are provided in the nozzle (12) which are adapted to individually heat or cool plastic melt inside the channels (16, 17).

8. Device according to claim 7, wherein the separate channels (16, 17) have a rectangular cross-section and wherein the narrowing elements (34) are two lips along the long sides of each outlet (32) of rectangular cross-section.

9. Device according to claim 7 or 8, wherein the individual cooling or heating devices (36, 38, 40, 42) cooperate with a control device which is configured to individually heat or cool the upper side or lower side of at least one of the separate channels (16, 17).

10. Device according to any of the claims 7 to 9, wherein the separate channels (16, 17) branch off from a common duct (14) for melt.

11. Device according to any of the claims 7 to 10, wherein the number of separate channels (16, 17) ranges from 2 to 10, preferably from 2 to 6.

12. Thermoplastic plastic foam panel, especially from extruded foamed polystyrene, manufactured using the method according to any of the claims 1 to 6, wherein the cross-section of each individual strand (20a, 20b) of foamed plastic material is of super-elliptical shape with essentially planar main surfaces (50) at their top side and bottom side of each strand (20a, 20b).

13. Panel according to claim 12, wherein all individual strands combined in the panel (30) have essentially the same densities and heat conductivities.

14. Panel according to claim 12, wherein at last one of the individual strands has a density and thermal conductivity different to those of at least one other of the individual strands.

15. Panel according to any of the claims 12 to 14, wherein the panels have a thickness between 80mm and 400mm, preferably between 140 and 280 .

16. Panel according to any of the claims 12 to 15, wherein the number of individual strands ranges from 2 to 10, preferably from 2 to 6.

17. Panel according to any of the claims 12 to 16, wherein the panel has a thermal conductivity of 0.028 W/mK to 0.041 W/mK.

18. Panel according to any of the claims 12 to 17, wherein the panel has a density of 35 to 45 kg/m$^3$ and a compression strength between 200 and 900 kPa.

19. Use of a panel according to any of the claims 12 to 18 for heat insulation, especially for insulating buildings.

20. Use of a panel according to any of the claims 12 to 18 for acoustic insulation, especially footfall sound insulation.

21. Use of a panel according to any of the claims 12 to 18 for water insulation in buildings, especially in basements and roofing.

Fig. 1

Fig. 2

Fig. 3

$\rho_1, \rho_3 > \rho_2$

$\lambda_2 < \lambda_1, \lambda_3$

$\rho_1, \lambda_1$
$\rho_2, \lambda_2$
$\rho_3, \lambda_3$

Fig. 5

$\rho_1 = \rho_2 = \rho_3 = \rho_4 = \rho_{\text{total XPS panel}}$

$\lambda_1 = \lambda_2 = \lambda_3 = \lambda_4 = \lambda_{\text{total XPS panel}}$

$\rho_1, \lambda_1$
$\rho_2, \lambda_2$
$\rho_3, \lambda_3$
$\rho_4, \lambda_4$

Fig. 4

$$\rho_1 > \rho_2 > \rho_3 < \rho_4 < \rho_5$$

$$\lambda_1 > \lambda_2 > \lambda_3 < \lambda_4 < \lambda_5$$

Fig. 6

$$\rho_1 > \rho_2 > \rho_3 > \rho_4 > \rho_5$$

$$\lambda_1 > \lambda_2 > \lambda_3 > \lambda_4 > \lambda_5$$

22

$\rho_1, \lambda_1$
$\rho_2, \lambda_2$
$\rho_3, \lambda_3$
$\rho_4, \lambda_4$
$\rho_5, \lambda_5$

Fig. 7

$W_{panel}$

$l_{panel}$

30

$\rho_1, \lambda_1$
$\rho_2, \lambda_2$
$\rho_3, \lambda_3$
$\rho_4, \lambda_4$
$\rho_5, \lambda_5$

$t_{panel}$

Fig. 8

Fig 9: Thermal conductivity λ of conventional XPS panels

Table 1: Properties of prior-art XPS panels, (according EN 13164)

| Thickness [mm] | Thermal conductivity [W/mK] | Compressive strength [kPa] | Density [kg/m³] |
|---|---|---|---|
| 30 - 60 | 0,034 | | |
| 80 - 120 | 0,036 | 300 | 35 |
| 140-160 | 0,038 | | |
| 180 | 0,041 | | |
| | | | |
| 50 - 60 | 0,034 | 500 | 40 |
| 80 - 120 | 0,036 | | |
| | | | |
| 50 - 60 | 0,036 | 700 | 40 |

Table 2: Thermal conductivity λ of inventive XPS panels (according EN 13164)

| Thickness [mm] | Thermal conductivity [W/mK] | Compressive strength [kPa] | Density [kg/m³] |
|---|---|---|---|
| 80 - 140 | 0,028 - 0,034 | 200 - 700 | 30 - 45 |
| 160 - 260 | 0,030 - 0,036 | | |
| 280 - 340 | 0,032 - 0,038 | | |
| 360 - 400 | 0,035 - 0,041 | | |
| | | | |
| 100 - 140 | 0,028 - 0,034 | 500 - 900 | 30 - 45 |
| 160 - 240 | 0,030 - 0,036 | | |
| | | | |
| 120-140 | 0,030 - 0,036 | 700-900 | 30-45 |
| 160-200 | 0,031 - 0,037 | | |

**EUROPEAN SEARCH REPORT**

Application Number

EP 10 16 6609

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 121 130 A (WILEY FRED E ET AL) 11 February 1964 (1964-02-11) * column 2, lines 34-48 * * column 3, line 66 - column 4, line 13 * * examples 1-4 * * claims 1-8 * * figures 1-6 * ----- | 1-8, 10-21 | INV. B29C47/06 B29C44/46 ADD. B29C47/90 B29C47/86 |
| X | JP 2000 084993 A (MITSUBISHI KAGAKU FORM PLASTIC) 28 March 2000 (2000-03-28) * abstract * * paragraph [0001] * * paragraph [0003] * * paragraphs [0018 ] - [ 0023] * * paragraph [0055]; claims 4,8 * * figures 1,5,6 * ----- | 1,2,4-7, 9-19,21 | |
| X | US 4 192 839 A (HAYASHI MOTOSHIGE [JP] ET AL) 11 March 1980 (1980-03-11) * abstract * * column 6, line 25 - column 8, line 35 * * column 10, line 31 - column 11, line 55 * * examples 1-2 * * claims 1,8 * * figures 1-11 * ----- | 1,2, 4-12, 15-19 | |
| X | US 3 881 984 A (SODA SHIGENARI ET AL) 6 May 1975 (1975-05-06) * abstract * * examples 1-8 * * claims 1-33 * * figures 1-26 * ----- | 1,2,7, 10-18 | |
| X | JP 49 119964 A (N.N) 15 November 1974 (1974-11-15) * figures 1-7 * ----- -/-- | 1,2,7, 10,11 | |

TECHNICAL FIELDS SEARCHED (IPC)

B29C

The present search report has been drawn up for all claims

| Place of search | Date of completion of the search | Examiner |
|---|---|---|
| Munich | 22 November 2010 | Ngwa, Walters |

EPO FORM 1503 03.82 (P04C01)

Europäisches
Patentamt

European
Patent Office

Office européen
des brevets

# EUROPEAN SEARCH REPORT

Application Number

EP 10 16 6609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 174 771 A1 (ASAHI FIBREGLASS CO [JP]) 14 April 2010 (2010-04-14) * abstract * * page 7, line 6 - page 8, line 45 * * table 1 * ----- | 1-21 | |
| A | US 2005/256215 A1 (BURNHAM THEODORE A [US] ET AL) 17 November 2005 (2005-11-17) * abstract * * paragraph [0010] * * paragraph [0112] - paragraph [0123] * * figure 5 * ----- | 1-21 | |
| A | BALDWIN D F ET AL: "AN EXTRUSION SYSTEM FOR THE PROCESSING OF MICROCELLULAR POLYMER SHEETS: SHAPING AND CELL GROWTH CONTROL", CABIOS COMPUTER APPLICATIONS IN THE BIOSCIENCES, IRL PRESS,OXFORD, GB, vol. 36, no. 10, 1 May 1996 (1996-05-01), pages 1425-1435, XP000637008, ISSN: 0266-7061 * page 1428; figure 4 * ----- | 1-21 | TECHNICAL FIELDS SEARCHED (IPC) |

The present search report has been drawn up for all claims

| Place of search | Date of completion of the search | Examiner |
|---|---|---|
| Munich | 22 November 2010 | Ngwa, Walters |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                       EP 10 16 6609

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2010

| Patent document cited in search report | | Publication date | Patent family member(s) | | Publication date |
|---|---|---|---|---|---|
| US 3121130 | A | 11-02-1964 | AT | 241099 B | 12-07-1965 |
| | | | BE | 593303 A1 | 23-01-1961 |
| | | | CH | 396402 A | 31-07-1965 |
| | | | DE | 1269333 B | 30-05-1968 |
| | | | DK | 106943 C | 03-04-1967 |
| | | | ES | 259643 A1 | 16-10-1960 |
| | | | GB | 912888 A | |
| | | | LU | 38934 A1 | 09-09-1960 |
| | | | NL | 254014 A | |
| JP 2000084993 | A | 28-03-2000 | JP | 3587696 B2 | 10-11-2004 |
| US 4192839 | A | 11-03-1980 | NONE | | |
| US 3881984 | A | 06-05-1975 | NONE | | |
| JP 49119964 | A | 15-11-1974 | NONE | | |
| EP 2174771 | A1 | 14-04-2010 | CN | 101687361 A | 31-03-2010 |
| | | | WO | 2009001934 A1 | 31-12-2008 |
| | | | KR | 20100023794 A | 04-03-2010 |
| US 2005256215 | A1 | 17-11-2005 | AT | 295254 T | 15-05-2005 |
| | | | AT | 228421 T | 15-12-2002 |
| | | | AU | 755441 B2 | 12-12-2002 |
| | | | AU | 4164897 A | 19-03-1998 |
| | | | CA | 2264159 A1 | 05-03-1998 |
| | | | DE | 69717465 D1 | 09-01-2003 |
| | | | DE | 69717465 T2 | 10-07-2003 |
| | | | DE | 69733286 D1 | 16-06-2005 |
| | | | DE | 69733286 T2 | 19-01-2006 |
| | | | EP | 1275485 A2 | 15-01-2003 |
| | | | EP | 0923443 A2 | 23-06-1999 |
| | | | JP | 4240540 B2 | 18-03-2009 |
| | | | JP | 2002501443 T | 15-01-2002 |
| | | | JP | 4563146 B2 | 13-10-2010 |
| | | | JP | 2005178366 A | 07-07-2005 |
| | | | WO | 9808667 A2 | 05-03-1998 |
| | | | US | 6284810 B1 | 04-09-2001 |

EPO FORM P0459

For more details about this annex : see Official Journal of the European Patent Office, No. 12/82

**EP 2 397 303 A1**

## REFERENCES CITED IN THE DESCRIPTION

### Patent documents cited in the description

- EP 1213118 A
- EP 1213119 B1